# FASCICULE DE BREVET EUROPEEN

(11) **EP 1 099 675 B1**
(45) Date de publication et mention de la délivrance du brevet: **14.02.2007**
(21) Numéro de dépôt: 00402607.6
(22) Date de dépôt: 20.09.2000
(51) Int. Cl.: C04B 41/52, C09D 7/00, B05D 1/36

(54) **Matériau de revêtement de surfaces de bâtiments comprenant deux produits, procédé d'application et revêtement obtenu**
Zweikomponenten-Beschichtungsmaterial für Gebäudeoberflächen, Verfahren zum Auftragen und erhaltene Beschichtung
Two component coating material for building surfaces, process for applying and coating obtained

(30) Priorité: 10.11.1999 FR 9914171
(43) Date de publication de la demande: 16.05.2001
(73) Titulaire: RM Distribution, 92500 Rueil Malmaison (FR)
(72) Inventeur: RM Distribution, 92500 Rueil Malmaison (FR)
(74) Mandataire: Cabinet Plasseraud

(56) Documents cités:
- CA-A- 1 275 775
- DE-A- 19 731 485
- FR-A- 1 164 003
- FR-A- 2 407 249
- GB-A- 1 199 073
- US-A- 3 740 255
- DATABASE WPI Week 197745 Derwent Publications Ltd., London, GB; AN 1977-80539y XP002143983 & JP 52 117332 A (SUZUKA PAINT MFG CO LTD)

## Description

La plupart des revêtements destinés aux bâtiments, c'est-à-dire aux murs, parois, plafonds et sols s'appliquent sur des surfaces préparées et lisses. En outre, la préparation des surfaces avant l'application de la première couche de revêtement, peinture ou enduit épais, consiste à rendre étanche la surface à revêtir, afin qu'elle n'absorbe pas le revêtement car il apparaît alors des irrégularités selon le degré d'absorption de la surface de base en ses différentes zones, ce qui s'apparente à des taches extrêmement déplaisantes.

Parmi les revêtements connus, outre les peintures banales, on peut citer le stuc qui est connu depuis des siècles, qui est une composition formée de plâtre ou de poudre de marbre gâché avec une solution de colle forte formant un enduit imperméable et lisse, que l'on polit pour lui donner l'aspect brillant et glacé du marbre. Il est d'ailleurs nommé " marbre artificiel ".

A noter que la colle forte contient nécessairement des solvants qui ne s'évaporent que lentement s'ils sont d'origine naturelle ayant des composants huileux ou graisseux (colle de poisson par exemple) ou rapidement s'ils sont synthétiques.

Dans le premier cas ces solvants obligent à un temps d'attente incompatibles avec les habitudes modernes et ils dégagent des odeurs pénibles qui peuvent imprégner non seulement l'atmosphère mais également les tissus d'ameublement, les literies et autres aliments et objets de toutes sortes que l'on trouve dans les habitations déjà occupées, où l'on procède à des travaux. Dans le second cas, les solvants synthétiques dégagent aussi des odeurs désagréables mais, en plus, ils sont souvent dangereux du fait de leur caractère inflammable, voire explosif.

La présente invention s'écarte franchement de la technique antérieure, en ce qu'elle ne prévoit pas l'imperméabilisation initiale de la surface à revêtir, en ce qu'elle fait appel à des matériaux à l'eau et en ce qu'elle est compatible, au choix, avec des surfaces régulières ou avec de surfaces irrégulières, à l'instar des revêtements grossiers, rustiques ou vieillis.

A cette fin, l'invention a pour objet un matériau destiné au revêtement de surfaces de bâtiments, à savoir murs, parois, plafonds et sols, formé de deux produits distincts placés dans deux emballages différents éventuellement groupés dans un seul contenant, caractérisé en ce que le premier produit contient de fins éléments solides et non solubles tels que des fibres, des grains et analogues à délayer, ou déjà délayés, dans de l'eau en quantité correspondant à la formation d'une pâte de préférence blanche, certains de ces éléments étant de type absorbant comme, par exemple, de la vermiculite et/ou de la cellulose, tandis que le second produit contient une charge pulvérulente minérale et des additifs tels que résine synthétique, épaississant, antioxydant et autres, à gâcher, ou déjà gâchés, dans de l'eau en quantité correspondant à la formation d'une pâte éventuellement colorée.

Selon d'autres caractéristiques de ce matériau :
➢ le premier produit contient les composants suivants :
   - carbonate de calcium,
   - fine vermiculite,
   - résine synthétique en poudre,
   - biocide,
   - éléments fibreux tels que des fils,
   - fines particules de cellulose, •
   - charge minérale.
➢ le second produit contient les composants suivants :
   - carbonate de calcium,
   - oxyde de titane,
   - épaississant cellulosique,
   - résine de type acrylique,
   - biocide,
   - agent de coalescence,
   - charge minérale.
L'invention a également pour objet un revêtement pour surface de bâtiment, ce revêtement comprenant :
   - une couche de revêtement interne qui est destinée à être appliquée sur ladite surface et qui est constituée d'une première pâte à l'eau comprenant des éléments absorbants capables d'absorber de l'eau, et
   - une couche de revêtement externe qui est appliquée sur ladite couche de revêtement interne après séchage de cette dernière et qui est constituée d'une seconde pâte à l'eau.

Selon l'invention, ce revêtement est caractérisé en ce que lesdits éléments absorbants comprennent en combinaison des particules de cellulose et de vermiculite.

Ce revêtement selon l'invention est avantageusement obtenu par un procédé comprenant les étapes suivantes :
(i) on applique, sur une surface de bâtiment, une couche de revêtement interne constituée d'une première pâte à l'eau comprenant des éléments absorbants qui sont capables d'absorber de l'eau et qui comprennent en combinaison des particules de cellulose et de vermiculite,
(ii) on laisse sécher ladite couche interne par évaporation de l'eau qu'elle contient, puis
(iii) on applique sur ladite couche interne une couche de revêtement externe à base d'une seconde pâte à l'eau, pour l'obtention dudit revêtement dans lequel l'eau de ladite couche externe est absorbée par lesdits éléments absorbants.

L'invention a également pour objet un procédé pour l'application d'un revêtement sur des surfaces de bâtiments, à savoir murs, parois, plafonds et sols, au moyen de deux produits distincts, caractérisé en ce que l'on applique un premier produit constitué par une pâte à l'eau de préférence blanche contenant au moins un composant de type absorbant, qu'après application de ce premier produit on fait évaporer l'eau, notamment en laissant sécher le produit pendant au moins quelques heures, puis que l'on applique un second produit sur le premier, ce second produit étant constitué par une pâte à l'eau éventuellement colorée, l'eau de ce second produit devant être absorbée par le premier produit devenu sec.

Selon d'autres caractéristiques de ce procédé :
➢ on crée des irrégularités sur la surface de bâtiment à revêtir, notamment en y appliquant des éléments amovibles tels que des pièces adhésives, puis que l'on applique le premier produit, puis qu'on laisse sécher celui-ci, puis que l'on retire les éléments amovibles, puis que l'on applique le second produit ;
➢ on dispose les pièces adhésives de manière régulière, notamment en lignes, par exemple au moyen de rubans ;.
➢ on dispose les rubans de manière à former un réseau, afin qu'après retrait de ces rubans, le revêtement complet, à savoir les deux produits superposés, apparaisse sous l'aspect de composants individuels en relief par rapport à la surface revêtue, tels que des carreaux, des pièces de mosaïque, des dalles, des pierres des briques et autres, séparés par des joints en creux, là où étaient les rubans ;
➢ on dispose les pièces adhésives de manière irrégulière afin qu'après les avoir retirées, le revêtement complet, à savoir les deux produits superposés, apparaisse sous l'aspect de composants individuels irréguliers en relief par rapport à la surface revêtue, tels que des pierres non taillées, séparées par des espaces en creux, là où étaient les pièces adhésives ;
➢ on façonne le premier produit avant qu'il ne soit sec afin de lui donner un aspect de surface non uniforme, notamment en accentuant des reliefs ;
➢ après avoir appliqué le premier produit et avant qu'il ne soit sec, on en retire des fractions, puis qu'on laisse sécher ce produit, puis que l'on applique le second produit ;
➢ on applique l'un au moins des produits à la taloche ;
➢ après séchage du second produit, on applique une couche complémentaire de protection telle que du vernis ou de la cire sur l'un au moins des deux produits.

L'invention a également pour objet un revêtement de surfaces de bâtiments obtenu avec le matériau ci-dessus.

L'invention a également pour objet un revêtement de surfaces de bâtiments obtenu par la mise en oeuvre du procédé ci-dessus.

L'invention sera mieux comprise par la description détaillée ci-après qui n'est donnée qu'à titre d'exemple indicatif, non limitatif.

L'invention permet de revêtir des surfaces récentes, voire neuves, mais concerne aussi les surfaces anciennes, plus ou moins régulières du fait de leur vieillissement ou des traces provenant de différents revêtement qu'elles ont déjà reçus : peinture, colle de papier peint et autres.

Le matériau conforme à l'invention se présente sous la forme de deux produits distincts. Ils peuvent être placés dans deux emballages différents, ou bien être conditionnés séparément et groupés dans un contenant commun pour former un ensemble qui constitue une unité de vente et qui peut, en outre, être associé à un ou plusieurs produits complémentaires : cire, vernis, colorant, accessoires d'application tels que taloche, pinceaux et galets de lissage pour la finition.

Le premier produit peut se présenter sous forme d'une poudre qui est formée d'éléments de différentes granulométries, de fils, fibres et autres constituants solides, et qui est accompagnée d'une notice d'emploi précisant, en particulier, la dose d'eau dans laquelle doit être délayée la poudre pour obtenir une pâte de la viscosité voulue.

Le premier produit peut aussi avoir été préparé en usine, auquel cas il se présente à la clientèle déjà sous forme d'une pâte, de préférence blanche afin d'être utilisable partout.

Q'il soit sous forme de poudre ou sous forme de pâte, le premier produit comprend des éléments solubles et des éléments insolubles, minéraux et/ou synthétiques, afin qu'après qu'il ait été appliqué, le premier produit présente une surface non lisse.

Mais la présence de ces éléments insolubles a également pour but de permettre à la pâte de constituer une sorte d'armature apte à boucher les trous, fissures et petites inégalités et qui pourra suivre ultérieurement les fendillements qui peuvent se produire pour les masquer complètement.

Parmi les éléments insolubles, se trouvent des particules dont l'espèce et le nombre sont spécialement prévus pour qu'elles forment ensemble, à sec, une masse absorbante. Exemple d'une composition d'un tel produit :

| | |
|---|---|
| • carbonate de calcium : | 50 % |
| • fine vermiculite : | 1 % |
| • résine synthétique en poudre : | 1,5 % |
| • biocide : | 0,5 % |
| • éléments fibreux tels que des fils : | 1 % |
| • fines particules de cellulose : | 5 % |
| • autres charges minérales | 41 % |
| Total : | 100 % |

La résine synthétique est une poudre dispersable.

Les éléments fibreux sont avantageusement des fibres de verre d'un diamètre nominal inférieur à 1 millimètre et d'une longueur supérieure à 2 mm.

Le biocide est un composé ayant un large spectre d'efficacité de destruction de bactéries, de mousses, de moisissures, d'algues et de divers microorganismes indésirables.

On peut obtenir le premier produit soit sous forme d'une poudre à diluer, soit sous forme d'une pâte déjà diluée, prête à l'emploi.

On réalise la composition ci-dessus, par mélange de ses composants pulvérulents. Puis, selon que l'on prépare la pâte en usine ou que l'on vend des sachets de poudre à diluer, le producteur ou le consommateur délaye cette composition dans de l'eau et mélange soigneusement le tout pour obtenir une pâte homogène.

Par exemple, on prépare 10 kilos de la composition pulvérulente, puis on la dilue dans 7 litres d'eau en mélangeant soigneusement, jusqu'à obtention d'une pâte ayant une viscosité d'environ 70.000 centipoises.

Après avoir laissé reposer la pâte pendant quelques minutes, on dispose de 17 kilos de pâte prête à être conditionnée, par exemple dans des boites métalliques de 5 ou 10 kilos.

Pour revêtir un mètre carré de surface, il faut environ 1,7 kilo de pâte du premier produit.

Le second produit doit être appliqué sur le premier et forme une couche de finition, sachant que ce mot doit être compris comme signifiant que le matériau de l'invention se suffit à lui-même avec ses deux produits, mais cette couche de finition peut elle-même recevoir du vernis, ou de la cire.

Le second produit peut se présenter sous forme d'une pâte préparée en usine, éventuellement colorée, à conditionner ou déjà conditionnée dans des contenants tels que des bacs par exemple de 5 ou 10 kilos de capacité, et contenant la quantité de pâte prête à l'emploi du second produit pouvant couvrir le même nombre de mètres carrés que la quantité de premier produit vendu en poudre ou en pâte.

La pâte du second produit peut être blanche, auquel cas le consommateur qui souhaite avoir une couche de finition colorée, doit se procurer, éventuellement par un achat groupé, un ou plusieurs flacons, correspondant à au moins un colorant.

Le second produit comprend d'une part des éléments insolubles, minéraux et/ou synthétiques, formant une charge et d'autre part différents additifs tels qu'épaississant, antioxydants, biocides. En outre, ce second produit contient un agent de coalescence propre à favoriser la réunion des particules d'eau, comme cela sera explicité plus loin. Exemple d'une composition d'un tel produit :

| | |
|---|---|
| • carbonate de calcium : | 26 % |
| • oxyde de titane: | 8 % |
| • épaississant cellulosique | 0,6 % |
| • résine acrylique : | 14 % |
| • biocide : | 0,4 % |
| • agent de coalescence : | 1 % |
| • silice micronisée | 50 % |
| Total : | 100 % |

Le biocide est celui décrit plus haut.

On prépare, de préférence en usine, une certaine quantité de pâte contenant 7,5 % de cette composition pulvérulente, diluée dans 2,5 % d'eau en mélangeant soigneusement, jusqu'à obtention d'une pâte ayant une viscosité d'environ 20.000 centipoises.

Pour revêtir un mètre carré de surface, il faut environ 1 kilo de pâte du second produit.

Ce second produit est appliqué sur le premier produit quand celui-ci est sec.

La mise en oeuvre du matériau qui vient d'être décrit est obtenu en procédant de la manière suivante :

Il peut être nécessaire de préparer la surface à revêtir après un nettoyage destiné à retirer la poussière et les dépôts relativement gras qui affecteraient beaucoup la tenu du matériau. Si la surface propre à revêtir est mate et absorbante, on applique le matériau directement, à savoir d'abord une couche absorbante formée de la pâte constituant le premier produit.

Si, au contraire, la surface a un revêtement satiné ou brillant, elle est glissante, ce qui est peu propice à l'accrochage de la première couche absorbante, auquel cas on commence par rompre la continuité du revêtement, ce que l'on réalise facilement avec du papier de verre ou avec un outil qui le griffe, le lacère ou le perfore, puis on applique une sous-couche d'un produit procurant une surface granitée, non lisse, par exemple un enduit contenant une charge granuleuse telle que de la silice broyée selon une granulométrie correspondant à la rugosité de surface voulue.

Quant le premier produit est en place, directement sur la surface à revêtir ou sur une sous-couche intermédiaire, on le laisse sécher quelques heures. La durée du séchage dépend évidemment des conditions qui règnent à l'endroit où l'on applique le matériau de l'invention.

Avec des conditions moyennes de température et d'humidité, on compte de 24 à 48 heures pour obtenir le séchage complet.

L'application se fait en une seule passe, de préférence manuellement, à la taloche pour créer des irrégularités dans la couche absorbante, analogues à celles que l'on observe sur les murs anciens recouverts d'une couche épaisse, généralement de plâtre, là où la régularité du revêtement n'avait aucune importance et où l'essentiel était de réaliser le travail soi-même, sans faire appel à un professionnel, et le plus vite possible.

Or, c'est justement cet aspect chaleureux que l'on recherche souvent pour donner plus de charme et de personnalité à des surfaces monotones et plates, usuelles et anonymes.

Quand le premier produit est sec, il est dur et l'eau évaporée a libéré des espaces dans la masse absorbante.

On applique alors le second produit qui, lui aussi, est une pâte contenant de l'eau. L'application se fait aussi en une seule passe, manuellement à la taloche et cette application se fait plus ou moins finement selon l'effet recherché. Si l'on a créé des irrégularités dans le premier produit (la couche absorbante), autant les respecter en appliquant le second produit en couche mince, ce qui peut se faire en raclant légèrement le produit en excès, qui donne un aspect de pierres avec leurs irrégularités naturelles.

Comme le premier produit est sec et absorbant et que le second est une pâte à l'eau, celle-ci est absorbée par le premier produit, sous l'effet de la capillarité.

Il en résulte un séchage très rapide, essentiellement par absorption.

La présence d'un agent de coalescence favorise la réunion des particules d'eau et accélère encore le séchage de la couche de finition qui dépend directement de la rapidité d'absorption de l'eau par la couche absorbante.

La composition du second produit permet d'obtenir une couche de finition extrêmement dure et résistante que l'on pourrait qualifier de " pierre liquide ", du fait de sa résistance aux petits chocs, aux rayures et aux frottements par exemple, et aussi en raison de son toucher rappelant la pierre polie. On peut en outre cirer cette couche dure et son toucher rappelle alors celui du cuir de maroquinerie fine.

La matériau conforme à l'invention possède une propriété particulièrement intéressante et même surprenante par rapport aux caractéristiques décrites ci-dessus, notamment la dureté, cette propriété étant qu'après avoir été appliqué, récemment ou depuis longtemps, le matériau selon l'invention peut être facilement retiré au moyen d'une simple décolleuse à papier peint.

En effet, la décolleuse émet de la vapeur d'eau qui traverse aisément la couche de finition et atteint la couche absorbante. En effet, la couche de finition est constituée du second produit qui est issu d'une pâte à l'eau et elle se ramollit, se dissocie et dénude la couche absorbante qui, elle-même issue d'une pâte à l'eau, est pénétrée par la vapeur, se désunit et perd son adhérence. Le matériau dans son ensemble s'en va par plaques molles que l'on retire pour les éliminer.

Si l'on a revêtu la couche de finition par un vernis, celui-ci peut former une barrière au passage de la vapeur, auquel cas il faut rompre la continuité du vernis avant d'appliquer la décolleuse à papier peint, ce que l'on réalise facilement avec du papier de verre ou avec un outil qui griffe, lacère ou perfore le vernis.

Les irrégularités de la couche absorbante peuvent résulter simplement du maniement volontairement maladroit de la taloche mais on peut aussi créer des irrégularités, ou plus précisément, des discontinuités, en appliquant des éléments amovibles sur la surface à revêtir elle-même.

Il peut s'agir, par exemple, de signes précis tels que des lettres, des chiffres, des symboles ou des graphismes. Il peut s'agir aussi de simples lignes droites, brisées ou courbes selon l'effet recherché.

Ces éléments amovibles peuvent être des pièces adhésives, le mot " pièce " étant pris dans son acception la plus large et couvrant notamment les rubans adhésifs.

Après avoir posé ces éléments amovibles de manière régulière ou pas, on applique le premier produit et on le laisse sécher, puis on retire ces éléments amovibles qui laissent subsister des traces en creux par rapport aux reliefs dus à l'épaisseur du premier produit.

On applique alors le second produit sur l'ensemble, afin qu'il recouvre à la fois le premier produit et les creux.

Un effet particulièrement attractif est obtenu en utilisant des coquillages, des fragments de coquillages, des plantes, des traces ou formes d'animaux, car après leur retrait et après application de la couche de finition, les creux visibles évoquent les fossiles que l'on trouve fréquemment dans des roches.

Si l'on a disposé des rubans adhésifs en lignes droites régulières, verticalement et horizontalement, on crée un réseau qui donne aux parties en relief l'aspect de composants individuels de la surface revêtue, en particulier des carreaux, des dalles ou des briques.

On peut amplifier cet effet en appliquant sur les reliefs une peinture d'une certaine couleur et en appliquant une peinture ou un enduit d'une autre couleur dans les creux, par exemple blanc ou gris pour évoquer la couleur habituelle des joints de plâtre, de mortier ou de ciment.

Lorsque le support d'origine est apte à recevoir un fond coloré (peinture ou enduit), il est possible de lui donner d'abord cette coloration, puis de disposer des rubans adhésifs, après quoi on applique la couche à la fois sur le fond et sur les rubans adhésifs, puis on applique le second produit et, avant qu'il ne soit complètement sec, on retire les rubans adhésifs par une simple traction exercée sans brusquerie, afin de retirer en une seule fois les deux produits pendant que le premier absorbe l'eau du second, car dans cette situation, ils se détachent sans difficulté et suivent facilement les rubans adhésifs, exactement selon leurs bords.

Ainsi, on obtient des reliefs qui ont la couleur de la couche de finition et des intervalles qui ont la couleur du fond, en retrait des reliefs, et imitant d'autant mieux les joints traditionnels que l'on donne au fond une couleur adaptée : blanc, gris clair, brun, etc.

Au lieu de peindre les parties en relief, il est possible de les cirer pour leur donner une teinte différente de celle que l'on a donné à la pâte du second produit, soit qu'elle ait été teintée dans la masse lors de sa fabrication, soit que l'usager l'ait lui-même teintée avec un colorant ajouté avant application.

La cire peut être de couleur naturelle ou être teintée. Une solution consiste à y diluer de la poudre de titane qui donne des zones blanchâtres non régulières évoquant de manière très réaliste l'état de surface de pierres naturelles.

Ainsi, on peut créer des carrelages au sol ou sur des murs de salles d'eau par exemple, en évitant le travail long, fastidieux et délicat de la pose de carreaux individuels, ce qui peut nécessiter l'ajout d'une couche extérieure de vernis étanche à l'eau.

La dureté de la couche de finition est telle que le matériau conforme à l'invention tient lieu de carreaux sans abaissement sensible de la qualité, non seulement vis-à-vis de la résistance aux contraintes mécaniques mais également pour ce qui est de l'hygiène et de la propreté puisque le nettoyage de la couche de finition est comparable à celui des carreaux de faïence ou en plastique, surtout si on complète la couche de finition par un revêtement de protection tel qu'un vernis.

Bien entendu, on peut obtenir d'autre effets que celui de carreaux : pierres de taille, ardoises, briques etc.

Selon une caractéristique de l'invention, on lisse la couche de finition après un début de séchage, c'est-à-dire après quelques minutes seulement, avec une face bien plane et polie d'un objet dur, en particulier un galet ou autre fragment minéral tel qu'un morceau de marbre, par exemple.

On peut également, en plaçant des rubans adhésifs étroits selon une trame serrée et un peu irrégulière, obtenir un effet de mosaïque accentué par l'emploi de couleurs différentes pour chaque partie en relief déterminée par des sillons en creux.

Le revêtement obtenu conformément à l'invention, avec le matériau décrit et par mise en oeuvre du procédé ci-dessus, présente donc des qualités nouvelles et permet d'innombrables variantes d'applications, au point que le même matériau selon la manière dont il est appliqué, coloré et traité, peut être méconnaissable en comparant diverses réalisations.

Cela se conçoit si l'on imagine un mur reproduisant des ardoises, un sol présentant un carrelage ciré, une cloison présentant des carreaux de faïence blancs au-dessus d'un évier, un plafond à caissons, etc.

## Revendications

1. Revêtement pour surface de bâtiment, comprenant :
- une couche de revêtement interne qui est destinée à être appliquée sur ladite surface et qui est constituée d'une première pâte à l'eau comprenant des éléments absorbants capables d'absorber de l'eau, et
- une couche de revêtement externe qui est appliquée sur ladite couche de revêtement interne après séchage de cette dernière et qui est constituée d'une seconde pâte à l'eau,
**caractérisé en ce que** lesdits éléments absorbants comprennent en combinaison des particules de cellulose et de vermiculite.

2. Revêtement selon la revendication 1, **caractérisé en ce que** ladite première pâte comprend :
- les particules de cellulose selon une fraction à sec de 5 %, et
- les particules de vermiculite selon une fraction à sec de 1 %.

3. Revêtement selon la revendication 1 ou 2, **caractérisé en ce que** ladite première pâte et ladite seconde pâte comprennent chacune du carbonate de calcium.

4. Revêtement selon la revendication 3, **caractérisé en ce que** ladite première pâte comprend ledit carbonate de calcium selon une fraction à sec de 50 %.

5. Revêtement selon une des revendications précédentes, **caractérisé en ce que** ladite première pâte comprend en outre des fibres de verre, telles que des fibres présentant un diamètre nominal inférieur à 1 mm et une longueur supérieure à 2 mm.

6. Revêtement selon une des revendications précédentes, **caractérisé en ce que** ladite seconde pâte comprend un agent de coalescence apte à favoriser la réunion des particules d'eau.

7. Revêtement selon une des revendications précédentes, **caractérisé en ce que** ladite seconde pâte comprend de la silice micronisée.

8. Procédé d'obtention d'un revêtement selon une des revendications précédentes, **caractérisé en ce qu'**il comprend les étapes suivantes :
(i) on applique, sur une surface de bâtiment, une couche de revêtement interne constituée d'une première pâte à l'eau comprenant des éléments absorbants qui sont capables d'absorber de l'eau et qui comprennent en combinaison des particules de cellulose et de vermiculite,
(ii) on laisse sécher ladite couche interne par évaporation de l'eau qu'elle contient, puis
(iii) on applique sur ladite couche interne une couche de revêtement externe à base d'une seconde pâte à l'eau, pour l'obtention dudit revêtement dans lequel l'eau de ladite couche externe est absorbée par lesdits éléments absorbants.

9. Procédé selon la revendication 8, **caractérisé en ce que** l'on prépare ladite première pâte en délayant dans de l'eau les particules de cellulose selon une fraction à sec de 5 %, et les particules de vermiculite selon une fraction à sec de 1 %.

10. Procédé selon la revendication 8 ou 9, **caractérisé en ce que** l'on prépare ladite première pâte en délayant en outre dans de l'eau du carbonate de calcium et des fibres de verre, telles que des fibres présentant un diamètre nominal inférieur à 1 mm et une longueur supérieure à 2 mm.

11. Procédé selon une des revendications 8 à 10, **caractérisé en ce qu'**il comprend :
- antérieurement à l'étape (i), la création d'irrégularités sur ladite surface à revêtir en y appliquant des éléments amovibles, tels que des rubans adhésifs, et
- entre les étapes (ii) et (iii), le retrait desdits éléments amovibles, pour l'obtention suite à l'étape (iii) de reliefs et de creux.

12. Procédé selon une des revendications 8 à 10, **caractérisé en ce qu'**après avoir appliqué ladite couche interne à l'étape (i) et avant que cette dernière ne soit sèche, on en retire des fractions puis on la laisse sécher, antérieurement à l'étape (iii) ou l'on applique ladite couche externe.

13. Procédé selon une des revendications 8 à 12, **caractérisé en ce que** l'on applique ladite couche interne et/ou ladite couche externe à la taloche.

## Claims

1. Coating for a building surface comprising:
- an internal coating layer that is intended to be applied to said surface and that is made up of a first water-based paste comprising absorbent components capable of absorbing water; and
- an external coating layer that is applied to said internal coating layer, after the latter has dried, and that is made up of a second water-based paste,
**characterized in that** said absorbent components comprise a combination of cellulose and vermiculite particles.

2. Coating according to Claim 1, **characterized in that** said first paste comprises:
- cellulose particles with a dry fraction of 5%; and
- vermiculite particles with a dry fraction of 1%.

3. Coating according to Claim 1 or 2, **characterized in that** said first paste and said second paste each comprise calcium carbonate.

4. Coating according to Claim 3, **characterized in that** said first paste comprises said calcium carbonate with a dry fraction of 50%.

5. Coating according to one of the preceding claims, **characterized in that** said first paste further comprises glass fibres, such as fibres having a nominal diameter of less than 1 mm and a length greater than 2 mm.

6. Coating according to one of the preceding claims, **characterized in that** said second paste comprises a coalescent agent suitable for promoting the aggregation of water particles.

7. Coating according to one of the preceding claims, **characterized in that** said second paste comprises micronized silica.

8. Process for obtaining a coating according to one of the preceding claims, **characterized in that** it comprises the following steps:
(i) applying, to a building surface, an internal coating layer made up of a first water-based paste comprising absorbent components that are capable of absorbing water and that comprise a combination of cellulose and vermiculite particles;
(ii) leaving said internal layer to dry by evaporation of the water that it contains; and
(iii) applying an external coating layer based on a second water-based paste to said internal layer, in order to obtain said coating in which the water of said external layer is absorbed by said absorbent components.

9. Process according to Claim 8, **characterized in that** said first paste is prepared by mixing the cellulose particles with a dry fraction of 5% and the vermiculite particles with a dry fraction of 1% with water.

10. Process according to Claim 8 or 9, **characterized in that** said first paste is prepared by further calcium carbonate and glass fibres, such as fibres having a nominal diameter of less than 1 mm and a length greater than 2 mm, with water.

11. Process according to one of Claims 8 to 10, **characterized in that** it comprises:
- prior to step (i), the creation of irregularities on said surface to be coated by applying removable components thereto, such as adhesive tapes; and
- between steps (ii) and (iii), the removal of said removable components in order to obtain, following step (iii), reliefs and depressions.

12. Process according to one of Claims 8 to 10, **characterized in that** after having applied said internal layer in step (i) and before the latter is dry, fragments are removed therefrom then the layer is left to dry, prior to step (iii) when said external layer is applied.

13. Process according to one of Claims 8 to 12, **characterized in that** said internal layer and/or said external layer are applied using a float.

## Patentansprüche

1. Beschichtung für Gebäudeflächen, umfassend:
- einer inneren Schicht, die dazu vorgesehen ist, auf die Fläche aufgetragen zu werden und die sich aus einer ersten Masse auf Wasserbasis mit absorbierenden Bestandteilen zusammensetzt, die in der Lage sind, Wasser aufzunehmen, und
- einer äußeren Schicht, die auf die innere Schicht nach Trocknung derselben aufgetragen ist und die sich aus einer zweiten Masse auf Wasserbasis zusammensetzt,
**dadurch gekennzeichnet, dass** die absorbierenden Bestandteile eine Mischung aus Zellulose- und Vermiculitpartikeln beinhalten.

2. Beschichtung nach Anspruch 1, **dadurch gekennzeichnet, dass** die erste Masse
- Zellulosepartikel in einem Trockenanteil von 5%, sowie
- Vermiculitpartikel in einem Trockenanteil von 1% beinhaltet.

3. Beschichtung nach Anspruch 1 oder 2, **dadurch gekennzeichnet, dass** die erste Masse und die zweite Masse jeweils Calciumcarbonat beinhalten.

4. Beschichtung nach Anspruch 3, **dadurch gekennzeichnet, dass** die erste Masse das Calciumcarbonat in einem Trockenanteil von 50% beinhaltet.

5. Beschichtung nach einem der oben aufgeführten Ansprüche, **dadurch gekennzeichnet, dass** die erste Masse zusätzlich Glasfasern beinhaltet, wobei diese Fasern einen Nenndurchmesser von weniger als 1 mm und eine Länge von mehr als 2 mm aufweisen.

6. Beschichtung nach einem der oben aufgeführten Ansprüche, **dadurch gekennzeichnet, dass** die zweite Masse ein Koaleszenzmittel beinhaltet, das die Verbindung der Wasserpartikel unterstützt.

7. Beschichtung nach einem der oben aufgeführten Ansprüche, **dadurch gekennzeichnet, dass** die zweite Masse Microsilica enthält.

8. Verfahren zur Ausführung einer Beschichtung gemäß einem der oben aufgeführten Ansprüche, **dadurch gekennzeichnet, dass** das Verfahren die folgenden Schritte beinhaltet:
(i) auf eine Gebäudefläche wird eine innere Schicht, bestehend aus einer ersten Masse auf Wasserbasis mit absorbierenden Bestandteilen aufgetragen, die in der Lage sind, Wasser aufzunehmen und die eine Mischung aus Zellulose- und Vermiculitpartikeln beinhalten,
(ii) man lässt die innere Schicht durch Verdunstung des darin enthaltenen Wassers trocknen, und
(iii) man trägt auf die innere Schicht eine äußere Schicht aus einer zweiten Masse auf Wasserbasis auf, um auf diese Weise den Belag zu erhalten, indem das Wasser der äußeren Schicht durch die absorbierenden Bestandteile aufgenommen wird.

9. Verfahren nach Anspruch 8, **dadurch gekennzeichnet, dass** die erste Masse durch Anrühren von Zellulosepartikeln in einem Trockenanteil von 5% und von Vermiculitpartikeln in einem Trockenanteil von 1% in Wasser vorbereitet wird.

10. Verfahren nach Anspruch 8 oder 9, **dadurch gekennzeichnet, dass** die erste Masse durch zusätzliches Anrühren von Calciumcarbonat und Glasfasern in Wasser vorbereitet wird, wobei diese Fasern einen Nenndurchmesser von weniger als 1 mm und eine Länge von mehr als 2 mm aufweisen.

11. Verfahren nach einem der Ansprüche 8 bis 10, **dadurch gekennzeichnet, dass** bei diesem Verfahren
- vor Schritt (i) auf der zu beschichtenden Fläche eine Ungleichmäßigkeit erzeugt wird, indem auf diese Fläche wieder entfernbare Elemente, wie zum Beispiel Klebebänder, aufgebracht werden, und
- zwischen den Schritten (ii) und (iii) die wieder entfernbaren Elemente entfernt werden, um nach Schritt (iii) Reliefs und Vertiefungen zu erhalten.

12. Verfahren nach einem der Ansprüche 8 bis 10, **dadurch gekennzeichnet, dass** nach dem Auftragen der inneren Schicht in Schritt (i) und vor dem vollständigen Trocknen dieser Schicht Teile derselben entfernt werden und man diese Schicht anschließend vollständig trocknen lässt, bevor mit dem Schritt (iii) die äußere Schicht aufgetragen wird.

13. Verfahren nach einem der Ansprüche 8 bis 12, **dadurch gekennzeichnet, dass** die innere und/oder äußere Schicht mit Hilfe eina Glättscheibe aufgetragen wird.
